# EUROPÄISCHE PATENTSCHRIFT

(11) **EP 3 420 307 B1**
(45) Veröffentlichungstag und Bekanntmachung des Hinweises auf die Patenterteilung: **27.11.2019**
(21) Anmeldenummer: 17718801.8
(22) Anmeldetag: 22.02.2017
(51) Int. Cl.: G01B 21/06

(54) **MESSVORRICHTUNG ZUM BESTIMMEN EINER TEILLÄNGE EINES SICH BEWEGENDEN LÄNGLICHEN ELEMENTES**
MEASURING DEVICE FOR DETERMINING A PARTIAL LENGTH OF A MOVING ELONGATE ELEMENT
DISPOSITIF DE MESURE POUR DÉTERMINER UNE LONGUEUR PARTIELLE D'UN ÉLÉMENT ALLONGÉ EN MOUVEMENT

(30) Priorität: 22.02.2016 AT 501202016
(43) Veröffentlichungstag der Anmeldung: 02.01.2019
(73) Patentinhaber: Rapperstorfer, Hubert, 4652 Steinerkirchen (AT)
(72) Erfinder: Rapperstorfer, Hubert, 4652 Steinerkirchen (AT)
(74) Vertreter: Burger, Hannes
(86) Internationale Anmeldenummer: PCT/AT2017/060040
(87) Internationale Veröffentlichungsnummer: WO 2017/143375

(56) Entgegenhaltungen:
- DE-A1- 2 927 751
- FR-A1- 2 568 998
- US-A- 2 782 516
- US-A- 4 330 941

## Beschreibung

Die Erfindung betrifft eine Messvorrichtung zum Bestimmen einer Länge eines sich bewegenden länglichen Elements.

Aus der EP 0 184 327 B1 ist eine Vorrichtung zum Bestimmen der Länge eines sich bewegenden länglichen Elements bekannt, wobei die Vorrichtung zwei Rollen umfasst, zwischen welchen das längliche Element aufgenommen ist und welche bei einer Bewegung des länglichen Elementes von diesem angetrieben werden. Dadurch kann die Länge oder ein Vorschub des länglichen Elementes erfasst werden.

Aus der EP 0 862 958 B1 ist eine Maschine für die Herstellung von Bewehrungsstahlmatten bekannt, welche zwei Rollen umfasst, zwischen welchen ein Bewehrungsstab aufgenommen ist und welche bei einer Bewegung des Bewehrungsstabes angetrieben werden. Dadurch kann die Länge oder ein Vorschub des Bewehrungsstabes erfasst werden.

Die aus der EP 0 184 327 B1 und der EP 0 862 958 B1 bekannten Messvorrichtungen weisen den Nachteil auf, dass das Ergebnis der Messung mittels der Reibrollen besonders bei Elementen mit einer rauen Oberfläche, wie etwa Bewehrungsstahl, nur sehr ungenau ist.

Die US 4 330 941 A offenbart eine Messvorrichtung zum Bestimmen einer Teillänge zumindest eines sich bewegenden länglichen Elements. Die Messvorrichtung weist ein zwischen Umlenkrollen umlaufendes Endlosband auf, an welchem Dauermagnete angeordnet sind. Die Dauermagnete sind an der Oberfläche des Endlosbandes angeordnet und kontaktieren das zu messende längliche Element.

Die US 2782516 A offenbart eine Messvorrichtung zum Bestimmen einer Teillänge zumindest eines sich bewegenden länglichen Elements. Die Messvorrichtung weist eine zwischen Umlenkrollen umlaufende Endloskette auf, an welcher Dauermagnete angeordnet sind. Die Dauermagnete sind an der Oberfläche der Endloskette angeordnet.

Die DE 29 27 751 A1 offenbart eine Messvorrichtung zum Bestimmen einer Teillänge zumindest eines sich bewegenden länglichen Elements. Die Messvorrichtung weist ein zwischen Umlenkrollen umlaufendes Endlosband auf, an welchem Dauermagnete angeordnet sind.

Aufgabe der vorliegenden Erfindung war es, die Nachteile des Standes der Technik zu überwinden und eine Vorrichtung zur Verfügung zu stellen, mittels derer ein genaueres Messergebnis des Vorschubes oder der Länge eines länglichen Objektes erfassbar ist.

Diese Aufgabe wird durch eine Vorrichtung gemäß dem Anspruch 1 gelöst.

Erfindungsgemäß ist eine Messvorrichtung zum Bestimmen einer Teillänge zumindest eines sich bewegenden länglichen Elements ausgebildet. Die Messvorrichtung umfasst ein um eine erste Umlenkrolle und eine zweite Umlenkrolle umlaufendes Endlosband, wobei innerhalb des Endlosbandes Dauermagnete angeordnet sind und mittels der Dauermagnete ein Reibschluss zwischen einer Oberfläche des sich bewegenden länglichen Elements und einer Außenfläche des Endlosbandes herstellbar ist, wobei eine Erfassungseinheit vorgesehen ist, welche zur Erfassung der Positionsänderung des Endlosbandes ausgebildet ist. Insbesondere ist es zweckdienlich, wenn die Messvorrichtung keinen Antrieb aufweist, sondern nur vom sich bewegenden länglichen Element geschleppt wird, um dessen Länge genau bestimmen zu können.

Die erfindungsgemäße Messvorrichtung weist den Vorteil auf, dass durch die in dem Endlosband angeordneten Dauermagnete ein erhöhter Reibschluss zwischen Endlosband und länglichem Element hergestellt werden kann. Dadurch kann das das Endlosband vom sich bewegenden länglichen Element schlupffrei oder zumindest annähernd schlupffrei mitgenommen werden, wobei das Endlosband und das sich bewegende längliche Element synchron bewegt werden. Somit kann mittels dem Endlosband die Länge oder die Teillänge bzw. der Vorschub oder auch die Geschwindigkeit des sich bewegenden länglichen Elements bestimmt werden. Eine derartige Messvorrichtung kann einfach in bestehende Anlagenkonfigurationen integriert werden, wobei die Erfassungseinheit zur Informationsweitergabe an eine Maschinensteuerung gekoppelt werden kann. In einer Weiterbildung kann vorgesehen sein, dass nicht nur ein einzelnes sich bewegendes längliches Element erfasst wird, sondern dass gleich zwei oder ein ganzes Bündel von länglichen Elementen gleichzeitig über die Messvorrichtung bewegt wirden. Durch das Weglassen eines eigenen Antriebes an der Messvorrichtung kann darüber hinaus erreicht werden, dass die Messvorrichtung zum Nachrüsten von bereits bestehenden Anlagen eingesetzt werden kann und dort zur reinen Erfassung dient.

Weiters kann es zweckmäßig sein, wenn eine Innenfläche des Endlosbandes mit einer Messrolle zusammenwirkt, wobei die Erfassungseinheit als Drehwinkelsensor ausgebildet ist, welcher mit der Messrolle gekoppelt ist. Von Vorteil ist hierbei, dass ein Drehwinkelsensor, welcher an eine Messrolle gekoppelt ist, zum einen ein genaues Messergebnis liefern kann und darüber hinaus wenig verschleißanfällig und kostengünstig in der Anschaffung ist.

Ferner kann vorgesehen sein, dass eine der beiden Umlenkrollen als Messrolle ausgebildet ist. Von Vorteil ist hierbei, dass nicht eine eigene Messrolle ausgebildet sein muss, sondern dass eine der ohnehin benötigten Umlenkrollen gleichzeitig die Funktion der Messrolle erfüllen kann. Darüber hinaus eignen sich die Umlenkrollen ideal als Messrolle, da aufgrund der 180° Umspannung einer Umlenkrolle erreicht werden kann, dass möglichst wenig Schlupf zwischen Umlenkrolle und Endlosband auftritt.

Darüber hinaus kann vorgesehen sein, dass eine Innenfläche des Endlosbandes eine Verzahnung aufweist und zumindest die Messrolle eine entsprechende Gegenverzahnung aufweist, welche mit der Verzahnung des Endlosbandes korrespondiert. Von Vorteil ist hierbei, dass zwischen Messrolle und Endlosband eine formschlüssige Verbindung geschaffen werden kann und somit der Schlupf zwischen Messrolle und Endlosband auf null gebracht werden kann.

Vorteilhaft ist auch eine Ausprägung, gemäß welcher vorgesehen sein kann, dass im Endlosband eine Maßverkörperung mit sich wiederholenden, periodischen Teilstrichen ausgebildet ist, wobei die Erfassungseinheit als Inkrementalgeber ausgebildet ist. Mittels einem Inkrementalgeber kann die Vorschubbewegung des Endlosbandes mit einer hohen Genauigkeit erfasst werden.

Erfindungsgemäß sind die Dauermagnete innerhalb des Endlosbandes angeordnet und von diesem umschlossen. Von Vorteil ist hierbei, dass durch diese Maßnahme die Dauermagnete gegen Herausfallen aus dem Endlosband und auch vor Umwelteinwirkung geschützt werden können.

Ferner kann es zweckmäßig sein, wenn die Außenfläche des Endlosbandes aus einem weichelastischen Material mit einer Shore A - Härte zwischen 20 und 60, insbesondere zwischen 35 und 45, besteht. Von Vorteil ist hierbei, dass die Außenfläche des Endlosbandes durch diese Maßnahme gut am länglichen Element anhaften kann, wobei ein übermäßiger Abrieb des Endlosbandes hintangehalten werden kann.

Darüber hinaus kann vorgesehen sein, dass das Endlosband Aussparungen aufweist, welche sich über die Breite des Endlosbandes erstrecken und ausgehend von der Außenfläche in Richtung einer Innenfläche des Endlosbandes ausgebildet sind. Von Vorteil ist hierbei, dass durch die Aussparungen die effektive Dicke des Endlosbandes vermindert werden kann und dadurch der Minimaldurchmesser einer Umlenkrolle vermindert werden kann. Dadurch kann die gesamte Messvorrichtung kleiner gebaut werden.

Darüber hinaus kann vorgesehen sein, dass im Bereich des Endlosbandes eine Lichtschranke angeordnet ist. Von Vorteil ist hierbei, dass beim Zuführen einer neuen Rohmaterialstange der stirnseitige Anfang der Rohmaterialstange exakt erfasst werden kann und es somit nicht notwendig ist, dass ein Initialschnitt oder auch Referenzschnitt durchgeführt wird, um eine definierte Stirnfläche zu erhalten. Dadurch kann zum einen die Bearbeitungszeit verkürzt werden, da der Initialschnitt weggelassen werden kann. Darüber hinaus kann dadurch auch die Menge des anfallenden Abfallmaterials vermindert werden.

Zum besseren Verständnis der Erfindung wird diese anhand der nachfolgenden Figuren näher erläutert.

Es zeigen jeweils in stark vereinfachter, schematischer Darstellung:
- Fig. 1: einen Längsschnitt eines Ausführungsbeispiels einer Maschine;
- Fig. 2: einen Längsschnitt eines Ausführungsbeispiels einer Messvorrichtung;
- Fig. 3: eine perspektivische Ansicht eines Ausführungsbeispiels einer Messvorrichtung;
- Fig. 4: eine Querschnittdarstellung eines ersten Ausführungsbeispiels eines Endlosbandes;
- Fig. 5: eine Querschnittdarstellung eines zweiten, aber nicht-beanspruchten, Beispiels des Endlosbandes;
- Fig. 6: eine Querschnittdarstellung eines dritten Ausführungsbeispiels des Endlosbandes;
- Fig. 7: eine Längsschnittdarstellung eines Ausführungsbeispiels des Endlosbandes.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

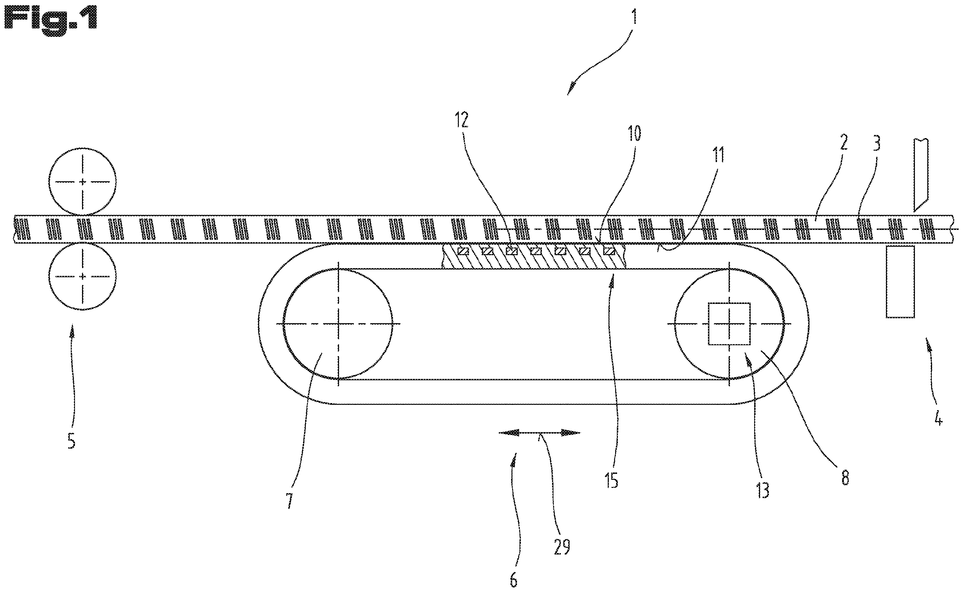

Fig. 1 zeigt eine schematische Darstellung einer Maschine 1 für die Herstellung von Bewehrungselementen. Insbesondere wird in Fig. 1 jener Teil der Maschine 1 gezeigt, in welchem längliche Elemente 2, insbesondere Bewehrungsstäbe 3 abgelängt werden. Diese Bewehrungsstäbe 3 können beispielsweise in einem Bewehrungselement verbaut werden. Dieser Teil der Maschine 1 umfasst eine Schneidvorrichtung 4 zum Ablängen des Bewehrungsstabes 3 und eine Vorschubvorrichtung 5 mittels welcher der Bewehrungsstab 3 zur Schneidvorrichtung 4 zugeführt wird. Als erfindungswesentliches Bauteil ist eine Messvorrichtung 6 ausgebildet, mittels welcher die vorgeschobene Länge des länglichen Elementes 2 gemessen werden kann.

Die Vorschubvorrichtung 5, wie sie in Fig. 1 dargestellt ist, weist zwei Antriebsrollen auf, mittels welchen der Bewehrungsstab 3 geklemmt und reibschlüssig vorgeschoben wird. Dadurch, dass der Bewehrungsstab 3 eine raue Oberfläche aufweist, ist jedoch die Vorschubbewegung dieser Rollenelemente nur sehr ungenau. Um die Genauigkeit zu verbessern, kann die erfindungsgemäße Messvorrichtung 6 eingesetzt werden.

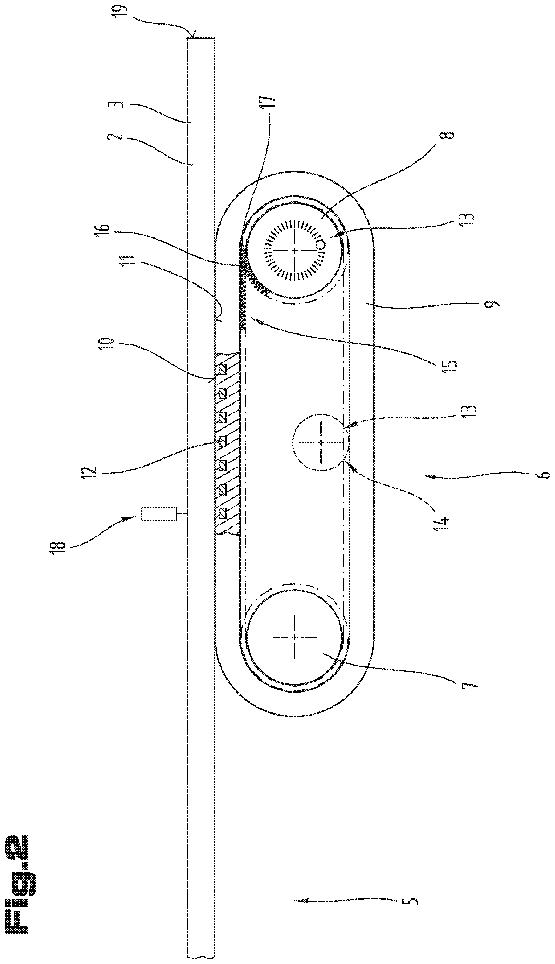

In der Fig. 2 ist eine weitere und gegebenenfalls für sich eigenständige Ausführungsform der Messvorrichtung 6 gezeigt, wobei wiederum für gleiche Teile gleiche Bezugszeichen bzw. Bauteilbezeichnungen wie in der vorangegangenen Fig. 1 verwendet werden. Um unnötige Wiederholungen zu vermeiden, wird auf die detaillierte Beschreibung in der vorangegangenen Fig. 1 hingewiesen bzw. Bezug genommen.

Die Messvorrichtung 6 kann neben der Verwendung bei der Herstellung von Bewehrungselementen auch zur Messung der Länge oder eines Längenabschnittes von anderen länglichen Elementen 2, wie etwa Rundstahl, Flachstahl oder Profilen, eingesetzt werden. Beispielsweise ist es auch denkbar, dass die Messvorrichtung 6 zur Messung der Länge eines von einer Rolle abgewickelten Bleches eingesetzt wird.

Die Messvorrichtung 6 kann derart klein gebaut werden, dass sie zum Nachrüsten in bereits bestehenden Maschinen eingesetzt werden kann. Insbesondere kann die Messvorrichtung 6 mit der Maschinensteuerung einer bestehenden Fertigungsanlage gekoppelt werden, um den Vorschub des länglichen Elementes 2 messen bzw. regeln zu können.

Wie aus Fig. 2 ersichtlich, umfasst die Messvorrichtung 6 eine erste Umlenkrolle 7 und eine zweite Umlenkrolle 8. Um die beiden Umlenkrollen 7, 8 herum ist ein Endlosband 9 geführt. Das Endlosband 9 kann eine rechteckige, eine runde oder auch eine sonstige Querschnittsform aufweisen. Das Endlosband 9 kann beispielsweise in Form eines Fördergurtes ausgebildet sein. Alternativ dazu ist es denkbar, dass das Endlosband 9 beispielsweise in Form einer Kette ausgebildet ist. In wieder einer anderen Ausführungsvariante ist es denkbar, dass das Endlosband 9 beispielsweise in Form eines Seiles ausgebildet ist.

Zum Messen der Vorschubbewegung ist vorgesehen, dass eine Außenfläche 10 des Endlosbandes 9 mit einer Oberfläche 11 des länglichen Elementes 2 in Kontakt steht und dass das Endlosband 9 durch zwischen der Außenfläche 10 und der Oberfläche 11 wirkende Reibung vorzugsweise ohne Schlupf mit der Vorschubbewegung des länglichen Elementes 2 mittransportiert wird.

Als wesentlich bei der Messvorrichtung 6 wird gesehen, dass das Endlosband 9 möglichst leichtgängig läuft, um vom länglichen Element 2 bewegt werden zu können.

Um eine möglichst gute Anhaftung des Endlosbandes 9 an der Oberfläche 11 des länglichen Elementes 2 zu erreichen, ist erfindungsgemäß vorgesehen, dass im Endlosband 9 Dauermagnete 12 angeordnet sind, mittels welchen das Endlosband 9 an das längliche Element 2 angepresst wird.

Weiters ist eine Erfassungseinheit 13 vorgesehen, welche die Bewegung des Endlosbandes 9 erfasst. Die Erfassungseinheit 13 kann beispielsweise in Form eines Sensors ausgebildet sein, welcher den Drehwinkel einer der beiden Umlenkrollen 7, 8 erfassen kann. Ein derartiger Sensor kann beispielsweise direkt auf eine der Stirnflächen der Umlenkrollen 7, 8 wirken.

Weiters ist es auch denkbar, dass die Erfassungseinheit 13 als eigenständiges Bauteil ausgebildet ist, welches mit einer Umlenkrolle 7, 8 drehbewegungsgekoppelt ist. Die Erfassungseinheit 13 kann entweder als Absolutwertgeber oder als Inkrementalgeber oder Drehimpulsgeber ausgebildet sein.

In einem weiteren Ausführungsbeispiel kann, wie in Fig. 2 schematisch angedeutet, eine Messrolle 14 ausgebildet sein, an welcher die Erfassungseinheit 13 wirkt. Die Messrolle 14 kann beispielsweise zwischen den beiden Umlenkrollen 7, 8 angeordnet sein.

Wie schematisch angedeutet, kann darüber hinaus vorgesehen sein, dass eine Innenfläche 15 des Endlosbandes 9 eine Verzahnung 16 aufweist, welche mit einer Gegenverzahnung 17 der Messrolle 14 bzw. einer der Umlenkrollen 7, 8 korrespondieren kann. Durch eine derartige Verzahnung kann die Genauigkeit des gemessenen Wertes erhöht werden.

Wie aus Fig. 2 ersichtlich, kann darüber hinaus vorgesehen sein, dass im Bereich der Messvorrichtung 6 ein optischer Sensor, wie etwa eine Lichtschranke 18 angeordnet ist, mittels welchem eine Stirnfläche 19 des länglichen Elementes 2 erfasst werden kann. Dadurch kann beim Einlegen von einem neuen länglichen Element 2 der Anfang des länglichen Elementes 2 bestimmt werden. Darüber hinaus kann vorgesehen sein, dass die Lichtschranke 18 eine erweiterte Funktionalität als Erfassungsmittel aufweist und beispielsweise zur Erfassung bzw. zur Bestimmung des länglichen Elementes 2 dient. Insbesondere kann vorgesehen sein, dass mittels der Lichtschranke 18 der Durchmesser bzw. die Type des länglichen Elementes 2 erfasst werden kann.

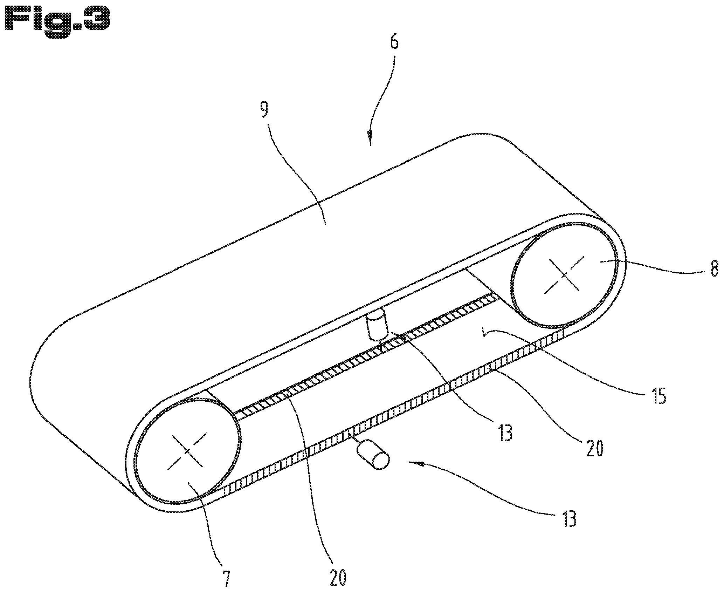

In der Fig. 3 ist eine weitere und gegebenenfalls für sich eigenständige Ausführungsform der Messvorrichtung 6 gezeigt, wobei wiederum für gleiche Teile gleiche Bezugszeichen bzw. Bauteilbezeichnungen wie in den vorangegangenen Figuren 1 und 2 verwendet werden. Um unnötige Wiederholungen zu vermeiden, wird auf die detaillierte Beschreibung in den vorangegangenen Figuren 1 und 2 hingewiesen bzw. Bezug genommen.

Wie aus Fig. 3 ersichtlich, kann vorgesehen sein, dass am Endlosband 9 der Messvorrichtung 6 eine Maßverkörperung 20 mit sich wiederholenden, periodischen Teilstrichen angeordnet ist, welche von der Erfassungseinheit 13 direkt abgelesen wird, wobei die Erfassungseinheit 13 als Inkrementalgeber ausgebildet sein kann. Beispielsweise kann die Maßverkörperung 20 stirnseitig am Endlosband 9 angeordnet sein.

In einer Alternativvariante ist es auch denkbar, dass die Maßverkörperung 20 beispielsweise an der Innenfläche 15 des Endlosbandes 9 angeordnet ist. Insbesondere kann die Maßverkörperung 20 im Endlosband 9 versenkt angeordnet sein, um eine übermäßige Beanspruchung oder einen übermäßigen Verschleiß der Maßverkörperung 20 zu vermeiden.

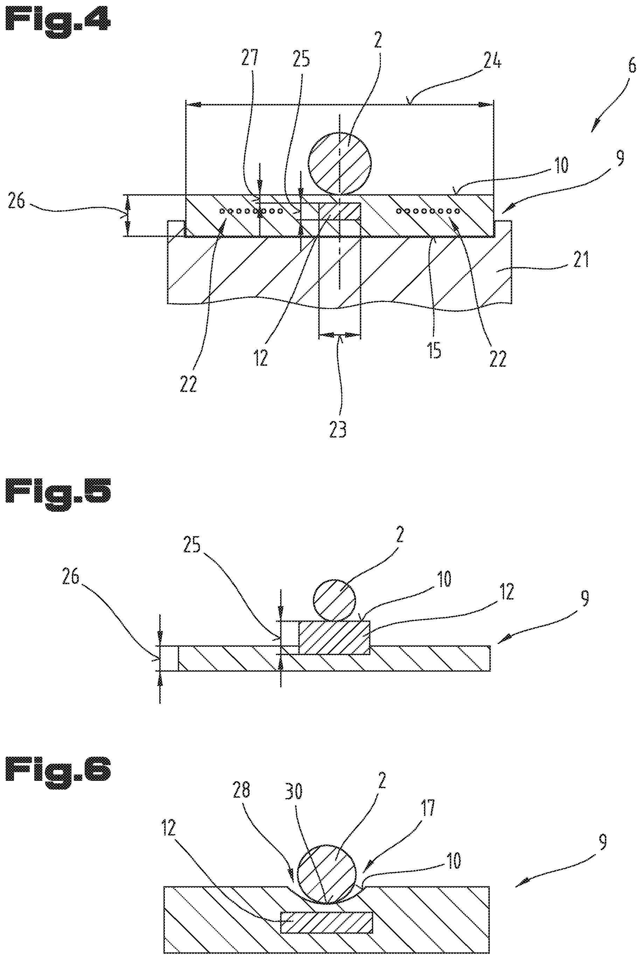

In der Fig. 4 ist eine weitere und gegebenenfalls für sich eigenständige Ausführungsform des Endlosbandes 9 gezeigt, wobei wiederum für gleiche Teile gleiche Bezugszeichen bzw. Bauteilbezeichnungen wie in den vorangegangenen Figuren 1 bis 3 verwendet werden. Um unnötige Wiederholungen zu vermeiden, wird auf die detaillierte Beschreibung in den vorangegangenen Figuren 1 bis 3 hingewiesen bzw. Bezug genommen.

Wie aus Fig. 4 ersichtlich, ist vorgesehen, dass das längliche Element 2 an der Außenfläche 10 des Endlosbandes 9 aufliegt. Der Außenfläche 10 gegenüberliegend ist die Innenfläche 15 des Endlosbandes 9 angeordnet, welche an einer Trageinheit 21 der Messvorrichtung 6 geführt sein kann.

In einer weiteren Ausführungsvariante kann vorgesehen sein, dass keine Trageinheit 21 ausgebildet ist, an welcher das Endlosband 9 aufliegt, sondern dass das Endlosband 9 freitragend zwischen den beiden Umlenkrollen 7, 8 gespannt ist.

Wie aus Fig. 2 weiters ersichtlich, ist vorgesehen, dass im Endlosband 9 mehrere Dauermagnete 12 ausgebildet sind, mittels welchen das längliche Element 2 an der Außenfläche 10 des Endlosbandes 9 fixiert werden kann. Insbesondere wird durch die Magnetkraft der Dauermagnete 12 erreicht, dass das längliche Element 2 an die Außenfläche 10 des Endlosbandes 9 angepresst wird und dadurch die Reibkraft zwischen länglichen Element 2 und Endlosband 9 erhöht wird. Dies führt dazu, dass das Endlosband 9 synchron mit dem länglichen Element 2 bewegt wird.

Um die Reibkraft zwischen länglichen Element 2 und Endlosband 9 weiter zu erhöhen, kann vorgesehen sein, dass die Außenfläche 10 eine bestimmte Oberflächenrauhigkeit aufweist.

Weiters kann vorgesehen sein, dass die Außenfläche 10 eine Beschichtung aufweist, um den Reibkoeffizienten bzw. die Verschleißfestigkeit des Endlosbandes 9 erhöhen zu können. Eine derartige Beschichtung kann beispielsweise ein besonderes Gummimaterial oder ein sonstiges Kunststoffmaterial sein. Weiters ist es denkbar, dass das Endlosband 9 ein Kernmaterial 22 aufweist, welches zur Aufnahme der Zugkräfte im Endlosband 9 dient. Das Kernmaterial 22 kann beispielsweise als Textilgewebe, durch Kunststofffasern, durch Stahlfasern oder sonstiges gebildet sein.

Das Endlosband 9 kann größtenteils aus einem Kunststoffmaterial, insbesondere aus einem gummiartigen Material, bestehen.

Wie aus Fig. 4 ersichtlich, kann vorgesehen sein, dass eine Breite 23 der Dauermagnete 12 zwischen 2 mm und 20 mm beträgt. Insbesondere ist es denkbar, dass die Breite 23 der Dauermagnete 12 an eine Breite 24 des Endlosbandes 9 angepasst ist, wobei die Breite 23 der Dauermagnete 12 geringer sein kann als die Breite 24 des Endlosbandes 9.

Wie aus Fig. 4 ersichtlich, kann vorgesehen sein, dass eine Dicke 25 des Dauermagneten 12 geringer gewählt ist als eine Dicke 26 des Endlosbandes 9. Dadurch kann erreicht werden, dass der Dauermagnet 12 mit einer Überdeckung 27 im Endlosband 9 aufgenommen ist. Insbesondere kann dadurch erreicht werden, dass der Dauermagnet 12 nicht aus dem Endlosband 9 herausfallen kann.

In der Fig. 5 ist ein nicht-beanspruchtes Beispiel des Endlosbandes 9 gezeigt, wobei wiederum für gleiche Teile gleiche Bezugszeichen bzw. Bauteilbezeichnungen wie in den vorangegangenen Figuren 1 bis 4 verwendet werden. Um unnötige Wiederholungen zu vermeiden, wird auf die detaillierte Beschreibung in den vorangegangenen Figuren 1 bis 4 hingewiesen bzw. Bezug genommen.

Wie aus Fig. 5 ersichtlich, aber nicht beansprucht, kann vorgesehen sein, dass der Dauermagnet 12 aus dem Endlosband 9 herausragt und somit die Außenfläche 10 an welcher das Endlosband 9 aufliegt, direkt am Dauermagnet 12 ausgebildet ist. Bei einer derartigen Ausführungsvariante kann die Dicke 26 des Endlosbandes 9 im Vergleich zur Dicke 25 des Dauermagneten 12 gering gehalten werden, wodurch erreicht werden kann, dass die Umlenkrollen 7, 8 einen möglichst kleinen Durchmesser aufweisen können, da die Flexibilität des Endlosbandes 9 erhöht werden kann.

In der Fig. 6 ist eine weitere und gegebenenfalls für sich eigenständige Ausführungsform des Endlosbandes 9 gezeigt, wobei wiederum für gleiche Teile gleiche Bezugszeichen bzw. Bauteilbezeichnungen wie in den vorangegangenen Figuren 1 bis 5 verwendet werden. Um unnötige Wiederholungen zu vermeiden, wird auf die detaillierte Beschreibung in den vorangegangenen Figuren 1 bis 5 hingewiesen bzw. Bezug genommen.

Wie aus Fig. 6 ersichtlich, kann vorgesehen sein, dass eine nutförmige Vertiefung 28 ausgebildet ist, welche an der Außenfläche 10 des Endlosbandes 9 angeordnet ist. Die nutförmige Vertiefung 28 erstreckt sich über eine Längserstreckung 29 des Endlosbandes 9. Mit anderen Worten ausgedrückt ist die nutförmige Vertiefung 28 umlaufend am Endlosband 9 angeordnet.

Wie aus Fig. 6 ersichtlich, ist vorzugsweise vorgesehen, dass ein Nutgrund 30 der nutförmigen Vertiefung 28 eine Rundung aufweist, sodass das Endlosband 9 immer am tiefsten Punkt des Nutgrundes 30 aufliegt. Dadurch kann erreicht werden, dass der Berührpunkt zwischen Endlosband 9 und länglichen Element 2 auch bei verschiedenen runden länglichen Elementen 2 mit verschiedenen Durchmessern immer auf gleicher Höhe liegt.

In einer alternativen Ausführungsvariante kann auch vorgesehen sein, dass die nutförmige Vertiefung 28 in Form einer V-förmigen Nut ausgebildet ist.

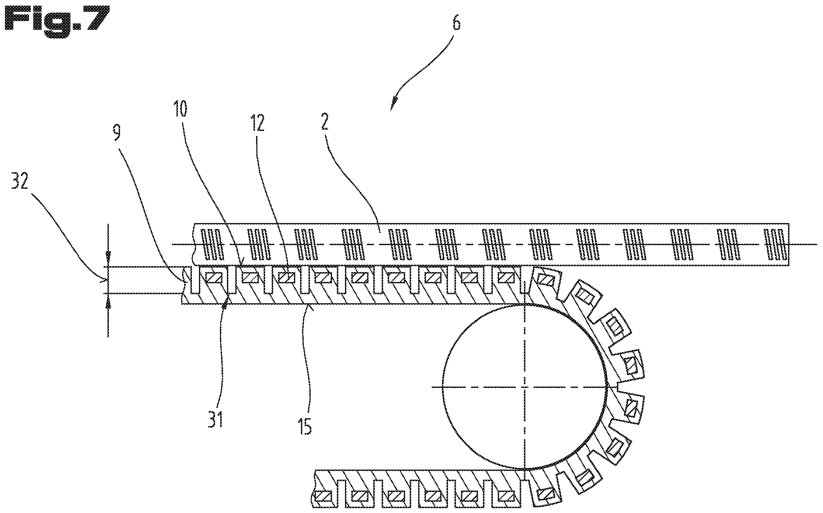

In der Fig. 7 ist ein schematischer Längsschnitt einer weiteren und gegebenenfalls für sich eigenständigen Ausführungsform des Endlosbandes 9 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus Fig. 7 ersichtlich, kann vorgesehen sein, dass das Endlosband 9 Aussparungen 31 aufweist, welche sich ausgehend von der Außenfläche 10 in Richtung Innenfläche 15 erstrecken. Die Aussparungen 31 weisen eine Ausspartiefe 32 auf, welche geringer ist als die Dicke 26 des Endlosbandes 9. Durch die Aussparungen 31 kann erreicht werden, dass das Endlosband 9 um eine Umlenkrolle 7, 8 mit einem nur geringen Durchmesser umgelenkt werden kann. Dadurch kann die Messvorrichtung 6 möglichst klein gebaut werden.

Die einzelnen Dauermagnete 12 können zwischen den Aussparungen 31 im Endlosband 9 aufgenommen sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden, wobei die Lage der Elemente zueinander und auch die Größenverhältnisse der Elemente dem zuständigen Fachmann eine für ihn erkennbare und ausführbare Lehre zum technischen Handeln vermitteln soll und nicht der künstlerischen Freiheit des Zeichners entspringt.

**Bezugszeichenaufstellung**

| | | | |
|---|---|---|---|
| 1 | Maschine | 31 | Aussparung |
| 2 | längliches Element | 32 | Ausspartiefe |
| 3 | Bewehrungsstab | | |
| 4 | Schneidvorrichtung | | |
| 5 | Vorschubvorrichtung | | |
| 6 | Messvorrichtung | | |
| 7 | erste Umlenkrolle | | |
| 8 | zweite Umlenkrolle | | |
| 9 | Endlosband | | |
| 10 | Außenfläche | | |
| 11 | Oberfläche | | |
| 12 | Dauermagnet | | |
| 13 | Erfassungseinheit | | |
| 14 | Messrolle | | |
| 15 | Innenfläche | | |
| 16 | Verzahnung | | |
| 17 | Gegenverzahnung | | |
| 18 | Lichtschranke | | |
| 19 | Stirnfläche | | |
| 20 | Maßverkörperung | | |
| 21 | Trageinheit | | |
| 22 | Kernmaterial | | |
| 23 | Breite Dauermagnet | | |
| 24 | Breite Endlosband | | |
| 25 | Dicke Dauermagnet | | |
| 26 | Dicke Fördergurt | | |
| 27 | Überdeckung Dauermagnet | | |
| 28 | nutförmige Vertiefung | | |
| 29 | Längserstreckung | | |
| 30 | Nutgrund | | |

## Patentansprüche

1. Messvorrichtung (6) zum Bestimmen einer Teillänge zumindest eines sich bewegenden länglichen Elements (2), wobei die Messvorrichtung (6) ein um eine erste Umlenkrolle (7) und eine zweite Umlenkrolle (8) umlaufendes Endlosband (9) umfasst, wobei am Endlosband (9) Dauermagnete (12) angeordnet sind und mittels der Dauermagnete (12) ein erhöhter Reibschluss zwischen einer Oberfläche (11) des sich bewegenden länglichen Elements (2) und einer Außenfläche (10) des Endlosbandes (9) herstellbar ist, wobei eine Erfassungseinheit (13) vorgesehen ist, welche zur Erfassung der Positionsänderung des Endlosbandes (9) ausgebildet ist, **dadurch gekennzeichnet, dass** die Dauermagnete (12) innerhalb des Endlosbandes (9) angeordnet sind und von diesem umschlossen sind.

2. Messvorrichtung nach Anspruch 1, **dadurch gekennzeichnet, dass** eine Innenfläche (15) des Endlosbandes (9) mit einer Messrolle (14) zusammenwirkt, wobei die Erfassungseinheit (13) als Drehwinkelsensor ausgebildet ist, welcher mit der Messrolle (14) gekoppelt ist.

3. Messvorrichtung nach Anspruch 2, **dadurch gekennzeichnet, dass** eine der beiden Umlenkrollen (7, 8) als Messrolle (14) ausgebildet ist.

4. Messvorrichtung nach einem der Ansprüche 1 bis 3, **dadurch gekennzeichnet, dass** eine Innenfläche (15) des Endlosbandes (9) eine Verzahnung (16) aufweist und zumindest die Messrolle (14) eine entsprechende Gegenverzahnung (17) aufweist, welche mit der Verzahnung (16) des Endlosbandes (9) korrespondiert.

5. Messvorrichtung nach einem der vorhergehenden Ansprüche, **dadurch gekennzeichnet, dass** im Endlosband (9) eine Maßverkörperung (20) mit sich wiederholenden, periodischen Teilstrichen angeordnet ist, wobei die Erfassungseinheit (13) als Inkrementalgeber ausgebildet ist.

6. Messvorrichtung nach einem der vorhergehenden Ansprüche, **dadurch gekennzeichnet, dass** die Außenfläche (10) des Endlosbandes (9) aus einem weichelastischen Material mit einer Shore A - Härte zwischen 20 und 60, insbesondere zwischen 35 und 45, besteht.

7. Messvorrichtung nach einem der vorhergehenden Ansprüche, **dadurch gekennzeichnet, dass** das Endlosband (9) Aussparungen (31) aufweist, welche sich über die Breite (24) des Endlosbandes (9) erstrecken und ausgehend von der Außenfläche (10) des Endlosbandes (9) in Richtung einer Innenfläche (15) des Endlosbandes (9) ausgebildet sind.

8. Messvorrichtung nach einem der vorhergehenden Ansprüche, **dadurch gekennzeichnet, dass** im Bereich des Endlosbandes (9) ein optisches Erfassungsmittel, insbesondere eine Lichtschranke (18) angeordnet ist.

9. Maschine (1) zum Ablängen eines Bewehrungsstabes (3) umfassend eine Schneidvorrichtung (4), eine Vorschubvorrichtung (5) zum Bewegen des Bewehrungsstabes (3) und eine Messvorrichtung (6) zum Erfassen der vorgeschobenen Länge des Bewehrungsstabes (3), **dadurch gekennzeichnet, dass** die Messvorrichtung (6) nach einem der vorhergehenden Ansprüche ausgebildet ist.

## Claims

1. A measuring device (6) for determining a partial length of at least one moving elongated element (2), wherein the measuring device (6) comprises an endless belt (9) traveling around a first deflection pulley (7) and a second deflection pulley (8), wherein permanent magnets (12) are arranged on the endless belt (9) and an increased frictional contact between a surface (11) of the moving elongated element (2) and an outer surface (10) of the endless belt (9) can be created by means of the permanent magnets (12), wherein a detection unit (13) is provided, which is adapted for detecting the change in position of the endless belt (9), **characterized in that** the permanent magnets (12) are arranged within the endless belt (9) and enclosed by it.

2. The measuring device according to claim 1, **characterized in that** an inner surface (15) of the endless belt (9) cooperates with a measuring pulley (14), wherein the detection unit (13) is designed as an angular position sensor, which is coupled to the measuring pulley (14).

3. The measuring device according to claim 2, **characterized in that** one of the two deflection pulleys (7, 8) is designed as a measuring pulley (14).

4. The measuring device according to one of claims 1 to 3, **characterized in that** an inner surface (15) of the endless belt (9) comprises a toothing (16) and at least the measuring pulley (14) comprises a corresponding counter-toothing (17), which corresponds with the toothing (16) of the endless belt (9).

5. The measuring device according to one of the preceding claims, **characterized in that** a measuring body (20) with repeating, periodic graduation marks is arranged in the endless belt (9), wherein the detection unit (13) is designed as an incremental encoder.

6. The measuring device according to one of the preceding claims, **characterized in that** the outer surface (10) of the endless belt (9) consists of a flexible material with a Shore A hardness of between 20 and 60, in particular between 35 and 45.

7. The measuring device according to one of the preceding claims, **characterized in that** the endless belt (9) comprises recesses (31), which extend across the width (24) of the endless belt (9) and are formed starting out from the outer surface (10) of the endless belt (9) into the direction of an inner surface (15) of the endless belt (9).

8. The measuring device according to one of the preceding claims, **characterized in that** an optical detection means, in particular a light barrier (18), is arranged in the region of the endless belt (9).

9. A machine (1) for cutting a reinforcing bar (3) comprising a cutting device (4), a feed device (5) for moving the reinforcing bar (3) and a measuring device (6) for detecting the fed length of the reinforcing bar (3), **characterized in that** the measuring device (6) is designed according to one of the preceding claims.

## Revendications

1. Dispositif de mesure (6) pour la détermination d'une longueur partielle d'au moins un élément allongé mobile (2), le dispositif de mesure (6) comprenant une bande sans fin (9) tournant autour d'un premier rouleau de renvoi (7) et d'un deuxième rouleau de renvoi (8), moyennant quoi, sur la bande sans fin (9), sont disposés des aimants permanents (12) et, au moyen des aimants permanents (12), une friction augmentée peut être établie entre une surface (11) de l'élément allongé mobile (2) et une surface externe (10) de la bande sans fin (9), une unité de détection (13) étant prévue, qui est conçue pour la détection du changement de position de la bande sans fin (9), **caractérisé en ce que** les aimants permanents (12) sont disposés à l'intérieur de la bande sans fin (9) et sont entourés par celle-ci.

2. Dispositif de mesure selon la revendication 1, **caractérisé en ce qu'**une surface interne (15) de la bande sans fin (9) interagit avec un rouleau de mesure (14), l'unité de détection (13) étant conçue comme un capteur d'angle de rotation, qui est couplé avec le rouleau de mesure (14).

3. Dispositif de mesure selon la revendication 2, **caractérisé en ce qu'**un des deux rouleaux de renvoi (7, 8) est conçu comme un rouleau de mesure (14).

4. Dispositif de mesure selon l'une des revendications 1 à 3, **caractérisé en ce qu'**une surface interne (15) de la bande sans fin (9) présente une denture (16) et au moins le rouleau de mesure (14) présente une contre-denture (17) correspondante qui correspond à la denture (16) de la bande sans fin (9).

5. Dispositif de mesure selon l'une des revendications précédentes, **caractérisé en ce que**, dans la bande sans fin (9), est disposée une incorporation de masse (20) avec des traits se répétant périodiquement, l'unité de détection (13) étant conçue comme un codeur incrémental.

6. Dispositif de mesure selon l'une des revendications précédentes, **caractérisé en ce que** la surface externe (10) de la bande sans fin (9) est constitué d'un matériau souple élastique avec une dureté Shore A entre 20 et 60, plus particulièrement entre 35 et 45.

7. Dispositif de mesure selon l'une des revendications précédentes, **caractérisé en ce que** la bande sans fin (9) comprend des évidements (31) qui s'étendent sur la largeur (24) de la bande sans fin (9) et qui sont formés à partir de la surface externe (10) de la bande sans fin (9) en direction d'une surface interne (15) de la bande sans fin (9).

8. Dispositif de mesure selon l'une des revendications précédentes, **caractérisé en ce que**, au niveau de la bande sans fin (9), est disposé un moyen de détection optique, plus particulièrement une barrière photoélectrique (18).

9. Machine (1) pour la mise à la longueur d'une barre d'armature (3) comprenant un dispositif de coupe (4), un dispositif d'avance (5) pour le déplacement de la barre d'armature (3) et un dispositif de mesure (6) pour la mesure de la longueur avancée de la barre d'armature (3), **caractérisée en ce que** le dispositif de mesure (6) est conçu selon les revendications précédentes.
